# EUROPEAN PATENT SPECIFICATION

(11) **EP 4 428 020 B1**
(45) Date of publication and mention of the grant of the patent: **08.07.2026**
(21) Application number: 24160261.4
(22) Date of filing: 28.02.2024
(51) Int. Cl.: B62J 6/16, B60R 1/00, B62J 27/00

(54) **DRIVE RECORDER SWITCH ARRANGEMENT FOR SADDLE-RIDING VEHICLE**
ANTRIEBSAUFZEICHNUNGSSCHALTERANORDNUNG FÜR SATTELFAHRZEUG
AGENCEMENT DE COMMUTATEUR D'ENREGISTREUR DE CONDUITE POUR VÉHICULE À SELLE

(30) Priority: 08.03.2023 JP 2023035881
(43) Date of publication of application: 11.09.2024
(73) Proprietor: Kawasaki Motors, Ltd., Akashi-shi, Hyogo 673-8666 (JP)
(72) Inventor: IWAMOTO, Taro, HYOGO, 673-8666 (JP); KASHIHARA, Takeshi, HYOGO, 673-8666 (JP); KUMADA, Takafumi, HYOGO, 673-8666 (JP)
(74) Representative: Dr. Gassner & Partner mbB

(56) References cited:
- JP-A- 2004 175 126
- JP-A- 2006 103 600
- US-A1- 2016 129 962
- HOOHOOHOBLIN: "RAM Motorcycle Handlebar Camera Mount Test & Review", 14 April 2012 (2012-04-14), XP093299843, Retrieved from the Internet <URL:https://www.youtube.com/watch?v=85mKY635QgE> [retrieved on 20250728]

## Description

### CROSS REFERENCE TO THE RELATED APPLICATION

This application is based on and claims Convention priority to Japanese patent application No. JP 2024127042 A (2023-035881), filed March 8, 2023.

### BACKGROUND OF THE INVENTION

### (Field of the Invention)

The present disclosure relates to a saddle-riding vehicle, comprising a handlebar with a left side and a right side; a camera mounted on the vehicle; a drive recorder that records video images taken by the camera, a drive recorder switch of the drive recorder that records video images taken by the camera, with the features of the preamble of claim 1.

### (Description of Related Art)

Saddle-riding vehicles such as a motorcycle have been known in which a drive recorder is equipped as accessories. Since, during driving, saddle-riding vehicles are subjected to vibrations and impinging wind, an improvement in usability is sought for an ON/OFF switch for recording by the drive recorder. Japanese Patent No. 5972332 B2 discloses that detection of an obstacle is indicated to a driver of a saddle-riding vehicle during driving, when an obstacle detection unit including a camera detects such an obstacle.

In Japanese Patent No. 5972332 B2, although the obstacle detection is indicated to a driver in the saddle-riding vehicle, the driver does not control devices, such as a drive recorder, that are not directly related to maneuver of the vehicle itself, in addition to the maneuver of the vehicle.

Hoohoohoblin: "RAM Motorcycle Handlebar Camera Mount Test & Review", 14 April 2012 (2012-04-14), XP093299843, Retrieved from the Internet: URL:https://www.youtube.com/watch?v=85mKY635QgE discloses a saddle-riding vehicle with a drive recorder switch arrangement according to the preamble of claim 1.

### SUMMARY OF THE INVENTION

A saddle-riding vehicle with a drive recorder comprising a drive recorder switch arrangement, which arrangement comprises a drive recorder switch having a better usability, with the features of claim 1 is disclosed and provided herein.

The inventive saddle-riding vehicle comprises a handlebar with a left side and a right side; a camera mounted on the vehicle; a drive recorder that records video images taken by the camera; a drive recorder switch of the drive recorder that records video images taken by the camera; a vehicle body control device arranged at the right side of the handlebar to allow control of a vehicle body of the vehicle; and an accessory control device arranged at the left side of the handlebar to allow control of an accessory of the vehicle, the drive recorder switch being arranged at the left side of the handlebar, wherein the accessory control device comprises an actuation switch, the drive recorder switch is arranged inwards of the actuation switch in a width direction of the vehicle on the left side of the handlebar, and the drive recorder switch is attached to the left side of the handlebar through a bracket using fasteners, wherein the accessory control device comprises an actuation lever, the actuation lever includes a holder part which retains the actuation lever on the left side of the handlebar, and the drive recorder switch is clamped by the holder part together with the actuation lever.

The drive recorder switch arrangement of the saddle-riding vehicle in accordance with the present disclosure allows a driver to actuate the drive recorder switch without having to release his or her grip on a handlebar. Further, since the drive recorder switch is arranged not at the one of the handlebars where the control device for the vehicle body to be operated with a high frequency (i.e., a control device exhibiting a high number of operating instances) is arranged but at the other of the handlebars where the control device for an accessory to be operated with a relatively low frequency (i.e., a control device exhibiting a relatively low number of operating instances) is arranged, the drive recorder switch has a better usability.

### BRIEF DESCRIPTION OF THE DRAWINGS

The present disclosure will be more clearly understood from the following description of preferred embodiments made by referring to the accompanying drawings. However, the embodiments and the drawings are given merely for the purpose of illustration and explanation, and should not be used to delimit the scope of the present disclosure, which scope is to be delimited by the appended claims. In the accompanying drawings, alike numerals are assigned to and indicate alike parts throughout the different figures, and:
Fig. 1 shows a side view of the front of a motorcycle which represents a saddle-riding vehicle equipped with a drive recorder switch arrangement according to a first embodiment of the present disclosure;
Fig. 2 shows a front elevational view of the front of the motorcycle;
Fig. 3 shows a perspective view of the drive recorder switch arrangement;
Fig. 4 shows another perspective view of the drive recorder switch arrangement; and
Fig. 5 shows a systematic diagram of wiring for the front of the motorcycle.

### DESCRIPTION OF EMBODIMENTS

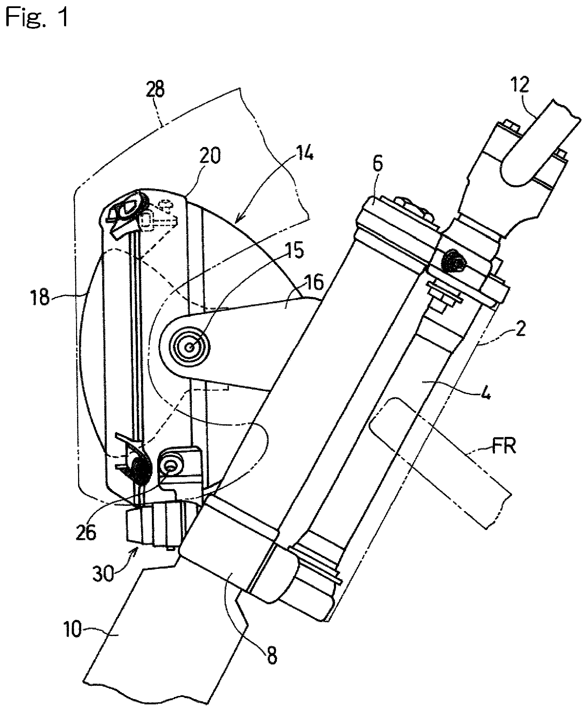

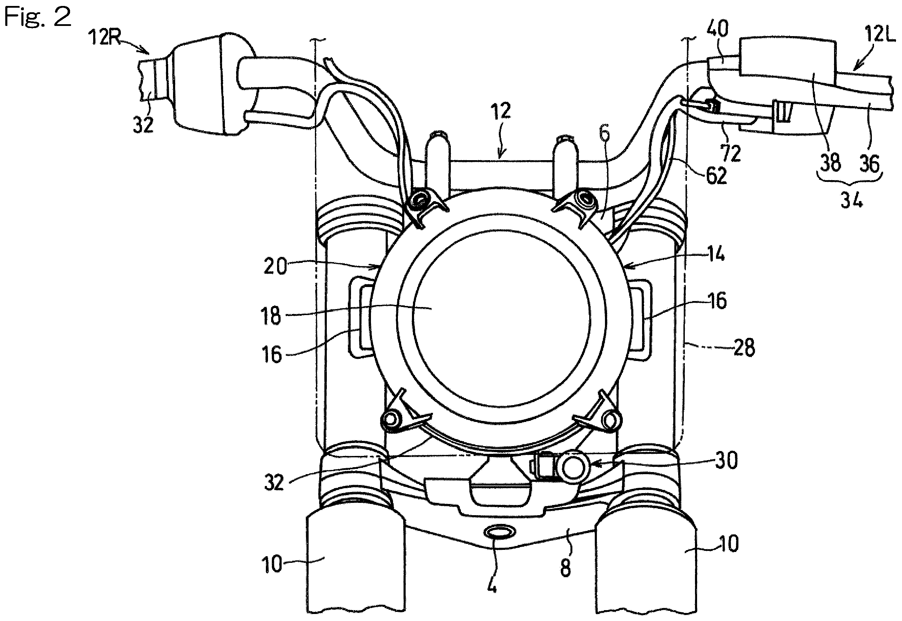

What follows is a description of preferred embodiments of the present disclosure made with reference to the drawings. Fig. 1 shows a side view of the front of a motorcycle which represents a saddle-riding vehicle equipped with a drive recorder switch arrangement according to a first embodiment of the present disclosure. Fig. 2 shows a front elevational view of the same.

In the discussions that follow, the terms "front" and "forward" used herein refer to a side facing the direction of travel of a vehicle, whereas the terms "rear" and "rearward" used herein refer to a side facing a direction counter to the direction of travel of the vehicle. Thus, a longitudinal direction of the vehicle coincides with a front-to-rear or rear-to-front direction. The terms "upper" and "upward" used herein refer to a side facing the top of the vehicle, whereas the terms "lower" and "downward" used herein refer to a side facing the bottom of the vehicle. The terms "left" and "leftward" and the terms "right" and "rightward" used herein refer to sides facing the left and the right of the vehicle, respectively, as viewed from a driver seated in the vehicle. Accordingly, a left-to-right or right-to-left direction coincides with a widthwise direction of the vehicle (hereinafter referred to as a "vehicle widthwise direction"). With respect to the vehicle widthwise direction, a "vehicle widthwise inside" refers to a side facing towards the longitudinally extending centerline of a vehicle body, whereas a "vehicle widthwise outside" refers to a side facing away from the centerline of the vehicle body.

The motorcycle illustrated in Fig. 1 includes a vehicle body frame FR extending in a front-to-rear direction. A power source (not shown) is supported on the vehicle body frame FR. The power source is, for instance, an engine. It should be understood that an engine is merely one of the non-limiting examples of the power source, and the power source may also be an electric motor.

A head pipe 2 is located at a front end of the vehicle body frame FR. A steering shaft 4 is pivotably inserted through the head pipe 2. An upper bracket 6 and a lower bracket 8 are pivoted to the head pipe 2 through the steering shaft 4. A front fork 10 is supported by the upper bracket 6 and the lower bracket 8. A front wheel (not shown) is supported at a lower end of the front fork 10, while a handle 12 is attached to the upper bracket 6 at an upper end of the front fork 10. The vehicle body frame FR and the head pipe 2 are depicted in dash double-dotted lines in Fig. 1.

A headlamp 14 which illuminates an area in front of the motorcycle is supported on the front fork 10. While, in the instant embodiment, the headlamp 14 uses a light-emitting diode (LED) as a light source, a halogen bulb may also be used. The headlamp 14 is removably mounted to the front fork 10 through lamp brackets 16 using a plurality of fasteners 15 such as bolts.

The headlamp 14 includes a lamp unit 18 which includes the light source, and a lamp housing 20 enclosing an outer periphery of the lamp unit 18. The lamp unit 18 is housed in the lamp housing 20 with its front side exposed to serve as a light-emitting surface

A front cowl 28 made of resin is fitted on the headlamp 14 so as to cover the headlamp 14 from the front. In the instant embodiment, the front cowl 28 is a small cowl (or a so-called bikini cowl) that only covers a circumferential region of the headlamp 14 and leaves uncovered a part of a vehicle body which are positioned rearwards of the front fork 8 when seen in a side view. It should be understood that a bikini cowl-type motorcycle is merely one of the non-limiting examples of a motorcycle according to the present disclosure, and a naked-type motorcycle with no cowl or a full-cowl type motorcycle having a vehicle body with its front covered from outside and the sides may also be used, for example.

A camera 30 which captures an image of an area in front of the vehicle is disposed below the headlamp 14. The camera 30 in the instant embodiment is secured to a lower part of the headlamp 14 by means of fasteners 26 such as bolts. However, this is only one of the non-limiting examples of the arrangement and securing configuration for the camera 30.

Turning to Fig. 2, a vehicle body control device 32 is arranged at one of the left and right handlebars 12L, 12R to allow control of the vehicle body, whereas an accessory control device 34 is arranged at the other of the left and right handlebars 12L, 12R to allow control of an accessory of the vehicle. In particular, the vehicle body control device 32 is arranged at the right handlebar 12R, whereas the accessory control device 34 is arranged at the left handlebar 12L. The vehicle body control device 32 comprises an accelerator grip and a brake lever (not shown).

The accessory control device 34 comprises: a clutch lever 36 which represents an actuation lever; and a housing switch 38 which represents an actuation switch. For instance, the housing switch 38 comprises actuation switches for a turn signal lamp and a hazard lamp.

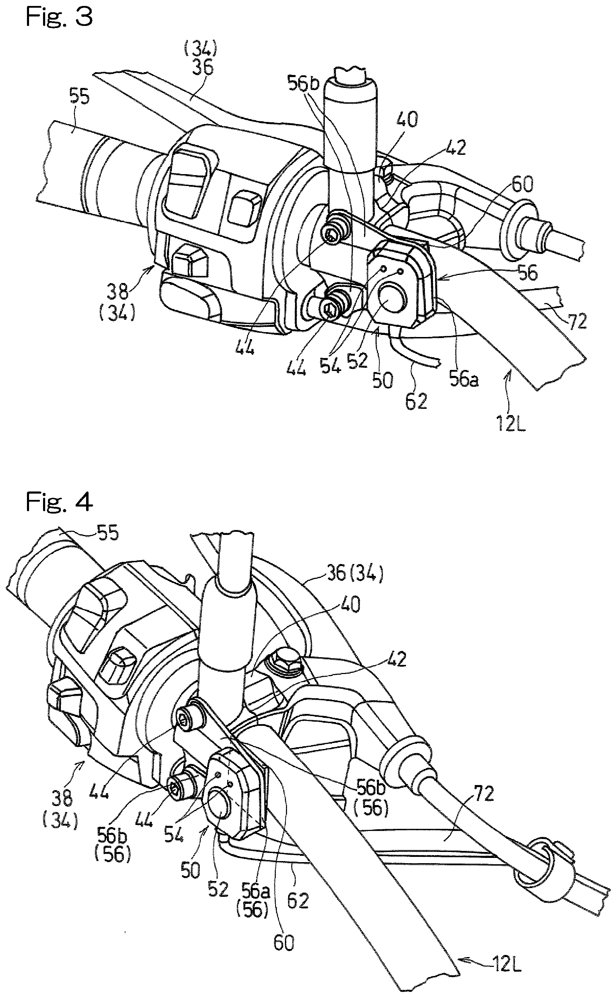

The clutch lever 36 includes a holder part 40 which retains the clutch lever 36 on the handlebar 12L. As illustrated in Fig. 3, the holder part 40 is formed of two, front and rear sub-parts that are separated along an intermediate separating line 42. The two sub-parts are fastened to each other with fasteners 44, such as bolts, that extend in a front-to-rear direction, in such a way to clamp the left handlebar 12L from the front and the rear. In this way, the sub-parts are coupled to each other so as to retain the clutch lever 36 on the left handlebar 12L. In the instant embodiment, two fasteners 44 aligned in a row in a vertical direction are used to couple the holder part 40. It should be understood that these are merely some of the non-limiting examples of the number and the arrangement of the fasteners 44.

A saddle-riding vehicle according to the present disclosure comprises a drive recorder (not shown) that records video images taken by the camera 30. For instance, the drive recorder is located below a seat on which a driver can be seated.

A saddle-riding vehicle according to the present disclosure also comprises a drive recorder switch 50. In the instant embodiment, the camera 30 and the drive recorder are activated when an ignition of the vehicle is turned on, and then, automatically start continuously recording video images taken by the camera 30. The video images recorded by the drive recorder are deleted by being overwritten once a certain duration is reached (i.e., once they reach a certain volume).

By actuating the drive recorder switch 50, it is possible to save the video images recorded by the drive recorder at a specific timing. In particular, when the drive recorder switch 50 is turned on, the video images are saved without being deleted by being overwritten, for a prescribed period of time or until the drive recorder switch 50 is turned off.

The drive recorder switch 50 in the instant embodiment includes an ON/OFF switch button 52 and an indicator 54 which indicates NORMAL, TROUBLE, REC, and/or other such status. As previously described, usability is desired for the drive recorder switch 50, since a driver actuates the drive recorder switch 50 while maneuvering a saddle-riding vehicle which is subjected to vibrations and impinging wind during driving.

The drive recorder switch 50 is attached to the left handlebar 12L. This allows a driver to actuate the drive recorder switch 50 without having to release his or her grip on the handlebars 12L, 12R. The drive recorder switch 50 thereby has a better usability. Further, since the drive recorder switch 50 is arranged not at the right handlebar 12R where the vehicle body control device 32 to be operated with a high frequency (i.e., a control device exhibiting a high number of operating instances) is arranged but at the left handlebar 12L where the accessory control device 34 to be operated with a relatively low frequency (i.e., a control device exhibiting a relatively low number of operating instances) is arranged, the drive recorder switch 50 has a better usability.

The drive recorder switch 50 is arranged inwards of the housing switch 38 in a vehicle widthwise direction on the left handlebar 12L - that is, arranged on a side of the left handlebar 12L that is distal from a grip 55 which is intended to be gripped by a driver. In this way, the actuation of the housing switch 38 is not adversely affected by the presence of the drive recorder switch 50, thereby keeping controllability of the vehicle during driving uncompromised.

The drive recorder switch 50 is attached to the left handlebar 12L through a bracket 56. In particular, the drive recorder switch 50 is attached to the left handlebar 12L through the bracket 56 using the fasteners 44 such as bolts. In the instant embodiment, two fasteners 44 aligned in a row in a vertical direction are used to attach the drive recorder switch 50.

The bracket 56 comprises a metal planar material and includes: a switch mount part 56a on which the drive recorder switch 50 is mounted; and a to-be-supported part 56b in which insertion holes for the fasteners 44 are defined. The drive recorder switch 50 is mounted on a rear side of the switch mount part 56a of the bracket 56 via, for example, a bonding medium such as a double-sided tape. This is only one of the non-limiting examples of how the drive recorder switch 50 may be attached.

In the instant embodiment, there are two to-be-supported parts 56b extending on the vehicle widthwise outside of and from the switch mount part 56a and provided spaced apart in a vertical direction. The fasteners 44 are inserted through the respective to-be-supported parts 56b.

In the instant embodiment, the drive recorder switch 50 is clamped together with the clutch lever 36 by the holder part 40 of the clutch lever 36. That is, the drive recorder switch 50 is attached to the left handlebar 12L by means of the two fasteners 44 that are concurrently used to couple the two sub-parts of the holder part 40 to retain the clutch lever 36 on the left handlebar 12L. Alternatively, however, the clutch lever 36 and the drive recorder switch 50 may be attached to the left handlebar 12L independently of each other.

As illustrated in Fig. 4, an elastic member 60 such as rubber is interposed between the drive recorder switch 50 and the left handlebar 12L. In the instant embodiment, the elastic member 60 comprises an oblong planar material and is mounted on a front side of the switch mount part 56a of the bracket 56 for the drive recorder switch 50 so as to be clamped from the front and the rear between the bracket 56 and the left handlebar 12L. The elastic member 60 is mounted on the bracket 56 via, for example, a bonding medium such as a double-sided tape. The provision of the elastic member 60 improves the usability of the drive recorder switch 50 during actuation of its ON/OFF switch button 52 and also reduces vibrations transmitted to the drive recorder switch 50 during driving.

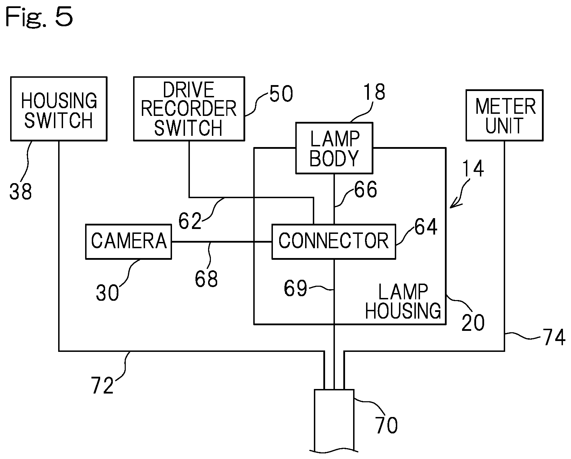

Turning to Fig. 5, how the wiring of the drive recorder switch 50 may be implemented will be described. A harness 62 for the drive recorder switch 50 is guided into the lamp housing 22 of the headlamp 14 and is connected to a connector 64 within the lamp housing 22. Also connected to the connector 64 are a harness 66 for the lamp unit 18 and a harness 68 for the camera 30.

These harnesses 62, 66, 68 are bundled together into a shared harness 69 through the connector 64. The shared harness 69 is guided out of the lamp housing 22 and connects to a main harness 70. A harness 72 for the housing switch 38 and a harness 74 for a meter unit also connect to and are bundled together into the main harness 70 which, in turn, is extended towards the rear of the vehicle body.

According to the configuration described thus far, a driver can actuate the drive recorder switch 50 without having to release his or her grip on a handlebar 12L of Fig. 3 during driving. The drive recorder switch 50 thereby has a better usability. Further, since the drive recorder switch 50 is arranged not at the right handlebar 12R where the vehicle body control device 32 to be operated with a high frequency (i.e., a control device exhibiting a high number of operating instances) is arranged but at the left handlebar 12L where the accessory control device 34 to be operated with a relatively low frequency (i.e., a control device exhibiting a relatively low number of operating instances) is arranged, the drive recorder switch 50 has a better usability.

In a drive recorder switch arrangement according to the present disclosure, the drive recorder switch 50 may be clamped together with the clutch lever 36 by the holder part 40 which retains the clutch lever 36 on the handlebar 12L. According to this configuration, no additional parts dedicated to the drive recorder switch 50 need to be provided for the support of the same, thereby resulting in a simplified design.

In this case, the drive recorder switch 50 may be fixed at two points to the holder part 40. According to this configuration, the drive recorder switch 50 can be rotationally fixed.

In a drive recorder switch arrangement according to the present disclosure, the drive recorder switch 50 may be arranged inwards of the housing switch 38 in a vehicle widthwise direction on the left handlebar 12L. According to this configuration, the presence of the drive recorder switch 50 does not lead to reduction in the usability of the housing switch 38 which is used during driving of the vehicle.

In a drive recorder switch arrangement according to the present disclosure, the elastic member 60 may be interposed between the drive recorder switch 50 and the left handlebar 12L. According to this configuration, the usability of the drive recorder switch 50 is improved while at the same time suppressing the oscillations of the drive recorder switch 50.

The above described configurations are only some of the non-limiting configurations of the present disclosure. By way of example, while the housing switch 38 and the drive recorder switch 50 in the above described embodiment are provided as distinct elements and attached to the left handlebar 12L independently of each other, the housing switch 38 may also be integrated with the drive recorder switch 50. Thus, such variants are also encompassed within the scope of the present disclosure.

## Claims

1. A saddle-riding vehicle, comprising:
a handlebar (12L, 12R) with a left side and a right side;
a camera (30) mounted on the vehicle;
a drive recorder that records video images taken by the camera (30);
a drive recorder switch (50) of the drive recorder that records video images taken by the camera (30);
a vehicle body control device (32) arranged at the right side of the handlebar (12R) to allow control of a vehicle body of the vehicle; and
an accessory control device (34) arranged at the left side of the handlebar (12L) to allow control of an accessory of the vehicle, the drive recorder switch (50) being arranged at the left side of the handlebar (12L), wherein
the accessory control device (34) comprises an actuation switch,
the drive recorder switch (50) is arranged inwards of the actuation switch in a width direction of the vehicle on the left side of the handlebar (12L), and
the drive recorder switch (50) is attached to the left side of the handlebar (12L) through a bracket (56) using fasteners (44),
**characterized in that**
the accessory control device (34) comprises an actuation lever,
the actuation lever includes a holder part (40) which retains the actuation lever on the left side of the handlebar (12L), and
the drive recorder switch (50) is clamped by the holder part (40) together with the actuation lever.

2. The saddle-riding vehicle as claimed in claim 1, wherein the drive recorder switch (50) is fixed at two points to the holder part (40).

3. The saddle-riding vehicle as claimed in claim 1 or 2, further comprising:
an elastic member (60) interposed between the drive recorder switch (50) and the left side of the handlebar (12L).

## Patentansprüche

1. Sattelfahrzeug, umfassend:
einen Lenker (12L, 12R) mit einer linken und einer rechten Seite;
eine am Fahrzeug angebrachte Kamera (30);
einen Fahrtenrekorder, der von der Kamera (30) aufgenommene Videobilder aufzeichnet;
einen Schalter (50) des Fahrtenrekorders, der die von der Kamera (30) aufgenommenen Videobilder aufzeichnet;
eine Fahrzeugkarosseriesteuervorrichtung (32), die an der rechten Seite des Lenkers (12R) angeordnet ist, um die Steuerung der Fahrzeugkarosserie des Fahrzeugs zu ermöglichen; und
eine Zubehörsteuervorrichtung (34), die auf der linken Seite des Lenkers (12L) angeordnet ist, um die Steuerung eines Zubehörteils des Fahrzeugs zu ermöglichen; wobei der Schalter (50) des Fahrtenrekorders auf der linken Seite des Lenkers (12L) angeordnet ist; wobei
die Zubehörsteuerungseinrichtung (34) einen Betätigungsschalter umfasst;
der Schalter (50) des Fahrtenrekorders in Breitenrichtung des Fahrzeugs innerhalb des Betätigungsschalters auf der linken Seite des Lenkers (12L) angeordnet ist, und
der Schalter (50) des Fahrtenrekorders (50) mittels Befestigungselementen (44) mittels einer Halterung (56) an der linken Seite des Lenkers (12L) befestigt ist,
**dadurch gekennzeichnet, dass**
die Zubehörsteuervorrichtung (34) einen Betätigungshebel umfasst;
der Betätigungshebel ein Halteteil (40) umfasst, das den Betätigungshebel auf der linken Seite des Lenkers (12L) hält, und
der Schalter (50) des Fahrtenrekorders zusammen mit dem Betätigungshebel durch das Halteteil (40) geklemmt ist.

2. Sattelfahrzeug nach Anspruch 1, wobei der Schalter (50) des Fahrtenrekorders an zwei Punkten am Halterungsteil (40) befestigt ist.

3. Sattelfahrzeug nach Anspruch 1 oder 2, ferner umfassend:
ein elastisches Element (60), das zwischen dem Schalter (50) des Fahrtenrekorders und der linken Seite des Lenkers (12L) angeordnet ist.

## Revendications

1. Véhicule à selle comprenant :
un guidon (12L, 12R) avec un côté droit et un côté gauche ;
une caméra (30) montée sur le véhicule ;
un enregistreur de conduite qui enregistre des images vidéo prises par la caméra (30) ;
un commutateur d'enregistreur de conduite (50) de l'enregistreur de conduite qui enregistre des images vidéo prises par la caméra (30) ;
un dispositif de commande de carrosserie de véhicule (32) placé sur le côté droit du guidon (12R) pour permettre la commande de la carrosserie du véhicule ; et
un dispositif de commande d'accessoire (34) placé sur le côté gauche du guidon (12L) pour permettre la commande d'un accessoire du véhicule, le commutateur d'enregistreur de conduite (50) étant disposé sur le côté gauche du guidon (12L), en ce que
le dispositif de commande d'accessoire (34) comprend un commutateur d'actionnement,
le commutateur d'enregistreur de conduite (50) est placé à l'intérieur du commutateur d'actionnement dans un sens de la largeur du véhicule sur le côté gauche du guidon (12L), et
le commutateur d'enregistreur de conduite (50) est fixé sur le côté gauche du guidon (12L) par l'intermédiaire d'un support (56) au moyen d'éléments de fixation (44),
**caractérisé en ce que**
le dispositif de commande d'accessoire (34) comprend un levier d'actionnement,
le levier d'actionnement comporte une partie de support (40) qui maintient le levier d'actionnement sur le côté gauche du guidon (12L), et
le commutateur d'enregistreur de conduite (50) est serré par la partie de support (40) conjointement avec le levier d'actionnement.

2. Véhicule à selle selon la revendication 1, en ce que le commutateur d'enregistreur de conduite (50) est fixé en deux point sur la partie de support (40).

3. Véhicule à selle selon la revendication 1 ou 2, comprenant en outre :
un élément élastique (60) intercalé entre le commutateur d'enregistreur de conduite (50) et le côté gauche du guidon (12L).
